# EUROPÄISCHE PATENTSCHRIFT

(11) **EP 3 110 987 B1**
(45) Veröffentlichungstag und Bekanntmachung des Hinweises auf die Patenterteilung: **15.05.2019**
(21) Anmeldenummer: 15701217.0
(22) Anmeldetag: 26.01.2015
(51) Int. Cl.: C23C 24/10, A61C 3/02, A61C 3/06, B23K 26/34, B23K 101/34, B23K 101/04, B23K 101/20, B23K 103/00, B23K 103/04, B23K 103/14, B23K 103/16, B23K 103/18

(54) **VERFAHREN ZUR HERSTELLUNG EINES DENTALINSTRUMENTS ODER MEDIZINISCHEN INSTRUMENTS**
METHOD OF MANUFACTURING A DENTAL TOOL OR A MEDICAL TOOL
PROCÉDÉ DE MANUFACTURE D'UN OUTIL DENTAIRE OU UN OUTIL MEDICAL

(30) Priorität: 26.02.2014 DE 102014203459
(43) Veröffentlichungstag der Anmeldung: 04.01.2017
(73) Patentinhaber: Gebr. Brasseler GmbH & Co. KG, D-32657 Lemgo (DE)
(72) Erfinder: PEUSER, Christian, 32756 Detmold (DE); DANGER, Karl-heinz, 32758 Detmold (DE); KÜLLMER, Michael, 32657 Lemgo (DE)
(74) Vertreter: Hoefer & Partner Patentanwälte mbB
(86) Internationale Anmeldenummer: PCT/EP2015/051505
(87) Internationale Veröffentlichungsnummer: WO 2015/128140

(56) Entgegenhaltungen:
- EP-A1- 2 578 180
- US-A- 6 146 476

## Beschreibung

Die Erfindung bezieht sich auf ein Verfahren zur Herstellung eines Instruments, insbesondere eines Dentalinstruments oder eines medizinischen Instruments.

Aus dem Stand der Technik sind unterschiedlichste Ausgestaltungsformen von Instrumenten der oben genannten Art bekannt, bei welchen Funktionsflächen mit abrasiven Partikeln belegt sind. Üblicherweise handelt es sich hierbei um Diamantkörner. Diese sind beim Stand der Technik galvanisch an der Oberfläche des Instruments befestigt.

EP 2 578 180 A, von der Anmelderin stammend, offenbart ein Dentalwerkzeug mit einem Arbeitsbereich, welcher mit abrasiven Partikeln belegt ist, welche zumindest zum Teil in eine galvanisch auf der Oberfläche des Arbeitsbereichs ausgebildete Trägerschicht eingebettet sind, auf welcher zumindest eine, die abrasiven Partikel zumindest teilweise umschließende Deckschicht angeordnet ist. Die Deckschicht kann durch Spritzen, Tauchen, Pulverbeschichten, Laseraufschmelzen und/oder Flammspritzen aufgebracht werden.

Eine galvanische Bindung von abrasiven Partikeln bei Dentalinstrumenten oder medizinischen Instrumenten (gleiches gilt für technische Schleifwerkzeuge, beispielsweise zur Schmuckherstellung oder zur Verwendung in Dentallabors) weist generell den Nachteil auf, dass bei der Verwendung des Instruments der Patient in Kontakt mit dem Bindungsmaterial kommt. Insbesondere bei der Verwendung von Nickel oder nickelenthaltenden Legierungen können sich unerwünschte Reaktionen beim Patienten ergeben. Es wurde deshalb im Stand der Technik versucht, die galvanische Bindung entweder nickelfrei auszubilden oder eine Befestigungsschicht, welche Nickel enthält, mittels einer zusätzlichen Deckschicht abzudecken. Diese Vorgehensweisen sind arbeitsintensiv und damit mit hohen Kosten verbunden. Weiterhin besteht der Nachteil, dass die Bereitstellung der Galvanik-Bäder sowie die Aufbereitung der Bäder mit hohem Aufwand verbunden sind, auch hinsichtlich der Umweltschutzbedingungen. Zusätzlich benötigen Galvanik-Bäder für die galvanische Bindung der abrasiven Partikel Zeit. Auch dies ist ein kostenerhöhender Faktor.

Die US 6 146 476 A beschreibt die Beschichtung eines Industriewerkzeugs mittels eines Lasers. Dabei ist primär beabsichtigt, auf den Grundkörper, der aus einem weniger harten Stahl gefertigt ist, eine Schicht aus Hartmetall aufzubringen. In einer zusätzlichen Variante ist es möglich, in die Hartmetallschicht weitere Partikel einzubringen, beispielsweise Carbide oder Diamanten.

Der Erfindung liegt die Aufgabe zugrunde, ein Verfahren der eingangs genannten Art zu schaffen, welches bei einfachem Aufbau und einfacher, betriebssicherer Durchführbarkeit eine zuverlässige Beschichtung einer Oberfläche eines Instruments mit abrasiven Partikeln ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass zunächst ein Rohling erzeugt wird. Dieser Rohling weist üblicherweise die gewünschten Endmaße des Instruments auf, abgesehen von der Beschichtung mit den abrasiven Partikeln und bedarf nur noch der Beschichtung mit den abrasiven Partikeln. Diese werden beispielsweise an einem Arbeitskopf oder an Funktionsflächen aufgebracht, so wie dies aus dem Stand der Technik bekannt ist. Erfindungsgemäß ist dabei vorgesehen, dass die abrasiven Partikel mittels eines Lasers fixiert werden. Zu diesem Zwecke wird eine Mischung der abrasiven Partikel mit Trägerpartikeln auf die zu beschichtende Oberfläche aufgebracht. Die Trägerpartikel werden mittels des Lasers partiell aufgeschmolzen und fixieren auf diese Weise die abrasiven Partikel.

Der Rohling wird erfindungsgemäß bevorzugt mittels spanender Verfahren hergestellt, beispielsweise Drehen oder Fräsen. Der Rohling, welchen man auch als Formkörper bezeichnen kann, kann beispielsweise aus hochfestem Stahl, aus Titan, aus Nickeltitan, aus Hartmetall, aus hochbelastbarem Kunststoff wie Peek, oder aus Keramik, gefertigt werden.

In günstiger Ausgestaltung der Erfindung ist vorgesehen, dass der Rohling mittels einer CNC-gesteuerten Bearbeitungsvorrichtung bearbeitet wird, um die abrasiven Partikel aufzubringen. Dabei erfolgt eine Relativbewegung einerseits zwischen dem Rohling und andererseits zwischen der Partikelzufuhr und dem Laser. Erfindungsgemäß ist es möglich, den Laser und die Partikelzufuhr stationär zu belassen, während der Rohling relativ zu diesen bewegt wird. Es ist jedoch auch möglich, den Rohling stationär zu halten und den Laser und die Partikelzufuhr zu bewegen. In jedem Falle ist vorgesehen, dass durch den Laser nebeneinanderliegende Bahnen der Mischung aus abrasiven Partikeln und Trägerpartikeln aufgeschmolzen werden. Dabei ist es erfindungsgemäß möglich, die Beschichtung einlagig oder mehrlagig auszubilden. Auch ist es möglich, an spezifischen Bereichen des Instruments unterschiedlich dicke oder konturierte Lagen aus abrasiven Partikeln und Trägerpartikeln aufzubringen. Hierdurch ist es möglich, an bestimmten Stellen des Instruments eine dickere

Beschichtung mit abrasiven Partikeln vorzusehen und/oder das Abtragsverhalten der Wirkflächen des Instruments durch Konturierungen zu verbessern.

Die Trägerpartikel sind erfindungsgemäß bevorzugterweise metallische Partikel oder enthalten metallische Partikel. Beispielsweise können die Partikel aus Stahl, Stahllegierungen, Titan oder Titanlegierungen oder anderen geeigneten Metallen bestehen. Vorzugsweise sind biokompatible Materialen zu verwenden. Die Trägerpartikel können gleiche oder unterschiedliche Granulatgrößen haben.

Bei dem erfindungsgemäßen Verfahren ist es möglich, gleiche abrasive Partikel zu verwenden oder eine Mischung unterschiedlicher abrasiver Partikel vorzusehen. Insgesamt können die abrasiven Partikel in Form von Diamantkörnern ausgebildet sein, welche natürliche Diamantkörner oder synthetische Diamantkörner sind. Es ist auch möglich, beschichtete Körner als abrasive Partikel einzusetzen. Außer für Diamentkörner ist das erfindungsgemäße Verfahren auch für andere abrasive Partikel oder Schleifkornausführungen geeignet, beispielsweise aus Korund, Siliziumkarbid oder Bornitrid oder aus polykristallinem Diamant. Wie erwähnt, kann mittels des erfindungsgemäßen Verfahrens auch eine Mischung von unterschiedlichen abrasiven Partikeln hinsichtlich ihrer Korngrößen und/oder ihrer chemischen Zusammensetzungen zum Einsatz kommen.

Besonders günstig ist es, wenn die Korngrößen der abrasiven Partikel zwischen 5 µm und 850 µm betragen.

Der bei dem erfindungsgemäße Verfahren verwendete Laser ist bevorzugterweise ein kurz- oder ultrakurzgepulster Laser, wie etwa ein Femto-, Pico- oder Nano-Sekundenlaser.

Das erfindungsgemäße Verfahren ist auch so modifizierbar, dass es wie ein additives Herstellungsverfahren durchgeführt werden kann. Dabei kann die Mischung aus abrasiven Partikeln und Trägerpartikeln schichtweise auf die zu beschichtende Oberfläche aufgebracht und mittels des Lasers aufgeschmolzen werden. Hierbei befindet sich der Rohling in einem Behältnis, so dass der schichtweise Auftrag der Mischung aus abrasiven Partikeln und Trägerpartikel möglich ist. Diese Variante der Erfindung ermöglicht es insbesondere, dickere oder mehrschichtige Lagen von abrasiven Partikeln auf der Oberfläche des Rohlings zu befestigen.

Die Erfindung bezieht sich insbesondere auch auf die Verwendung eines (wie oben beschriebenen) Laserauftragsverfahrens für Dentalinstrumente oder medizinische Instrumente.

Im Folgenden wird die Erfindung anhand eines Ausführungsbeispiels in Verbindung mit der Zeichnung beschrieben. Dabei zeigt:
Fig. 1 eine schematische Darstellung eines erfindungsgemäßen Rohlings während der Beschichtung mit abrasiven Partikeln mit Hilfe eines Laserstrahls,
Fig. 2 eine schematisierte vergrößerte Darstellung des Beschichtungsvorgangs,
Fig. 3 ein Schliffbild des typischen Gefüges von gezogenem Stahl mit anschließender Wärmebehandlung, und
Fig. 4 ein Schliffbild eines durch ein additives Laseraufschmelzverfahren erzeugten Werkstoffs.

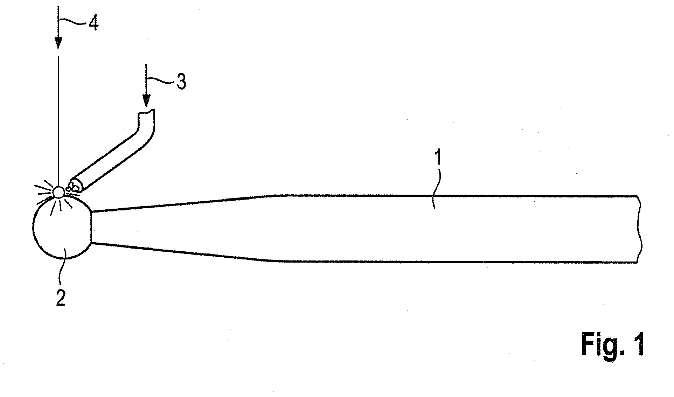

Die Fig. 1 zeigt einen Rohling 1, welcher hinsichtlich seiner Kontur spanend vorbearbeitet wurde. Der Rohling 1 umfasst einen Schaft sowie einen an diesem einstückig befestigten Kopf 2. Der Kopf 2 wird mittels des erfindungsgemäßen Verfahrens mit abrasiven Partikeln beschichtet. Hierzu ist eine Zuführung 3 für eine Mischung aus abrasiven Partikeln und Trägerpartikeln vorgesehen. Diese Mischung wird mittels eines Lasers 4 aufgeschmolzen, so dass die abrasiven Partikel an der Oberfläche des Rohlings 1 fest verankert sind.

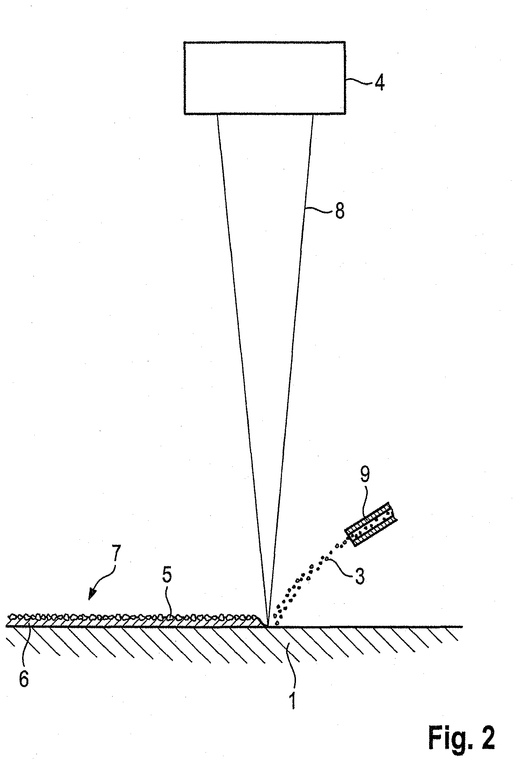

Die Fig. 2 zeigt eine vergrößerte Darstellung des erfindungsgemäßen Verfahrensablaufs. Vereinfacht ist die Oberfläche des Rohlings 1 dargestellt. Auf diese wird mittels einer Zuführdüse eine Mischung aus Trägerpartikeln und abrasiven Partikeln (Zuführung 3) aufgebracht. Am Auftreffpunkt der Mischung trifft ein aus dem Laser 4 austretender Laserstrahl 8 auf die Mischung auf und schmilzt diese partiell auf, ohne dass hierdurch die Oberfläche des Rohlings 1 beeinträchtigt wird. Dessen Materialeigenschaften werden durch die erfindungsgemäß verwendeten Laser (kurzgepulste oder ultrakurzgepulste Laser) nicht beeinträchtigt. Es bildet sich somit eine Beschichtungslage 7, welche abrasive Partikel 5 und eine Trägerschicht 6 umfasst. Die Trägerschicht 6 besteht aus den aufgeschmolzenen Trägerpartikeln.

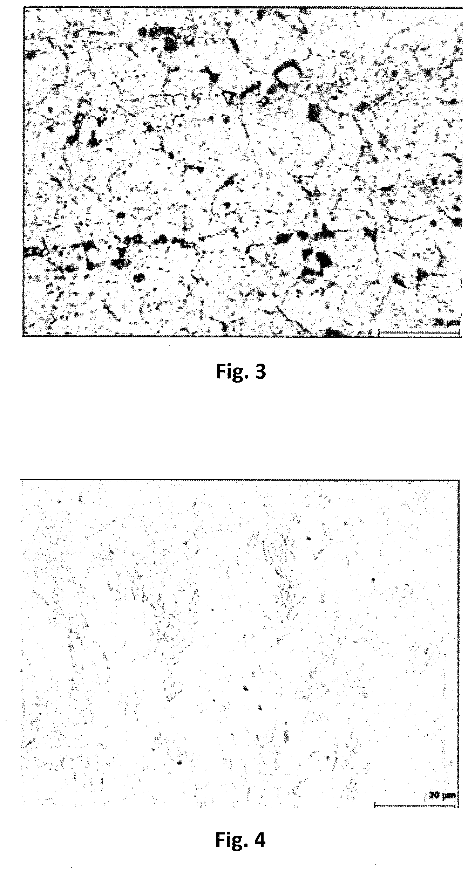

Die Figuren 3 und 4 stellen Schliffbilder dar, aus denen sich ein Vergleich zwischen einem herkömmlich erzeugten Werkstoff und einem mittels eines additiven Verfahrens erzeugten Werkstoff ergibt.

Bei dem in Figur 3 gezeigten Schliffbild handelt es sich um einen konventionell hergestellten Werkstoff, welcher das typische Gefüge eines gezogenen Stahls mit anschließender Wärmebehandlung aufweist. Dabei sind deutlich die längs angeordneten Karbide in der martensitischen Grundmasse zu erkennen.

Im Gegensatz hierzu zeigt die Figur 4 einen Schliff eines mittels eines additiven Laseraufschmelzverfahrens erzeugten Werkstoffs. Dabei ist in der Gefügeansicht deutlich ein grobes, martensitisches Gefüge mit feinen Karbidausscheidungen zu erkennen, welche keine besondere Anordnung aufweisen. Als vorteilhaft erweist es sich bei additiv hergestellten Werkstücken, dass diese keine Härterisse bilden, so wie dies bei konventionell erzeugten Werkstücken der Fall ist.

### Bezugszeichenliste

- 1: Rohling
- 2: Kopf
- 3: Zuführung einer Mischung aus Trägerpartikeln und abrasiven Partikeln
- 4: Laser
- 5: abrasive Partikel
- 6: Trägerschicht
- 7: Beschichtungslage
- 8: Laserstrahl
- 9: Zuführdüse

## Patentansprüche

1. Verfahren zur Herstellung eines Dentalinstruments oder eines medizinischen Instruments, bei welchem ein Rohling (1) erzeugt wird, welcher nachfolgend zumindest teilweise mit abrasiven Partikeln beschichtet wird, wobei die abrasiven Partikel in einer Mischung mit Trägerpartikeln auf die zu beschichtende Oberfläche zugeführt und mittels eines Lasers (4) aufgeschmolzen werden.

2. Verfahren nach Anspruch 1, **dadurch gekennzeichnet, dass** der Rohling (1) mittels einer CNC-gesteuerten Bearbeitungsvorrichtung beschichtet wird, wobei eine Relativbewegung zwischen dem Rohling (1) und dem Laser (4) und der Partikelzufuhr (3) erfolgt.

3. Verfahren nach Anspruch 2, **dadurch gekennzeichnet, dass** der Rohling (1) relativ zu dem Laser (4) und der Partikelzufuhr (3) bewegt wird.

4. Verfahren nach Anspruch 2, **dadurch gekennzeichnet, dass** der Laser (4) und die Partikelzufuhr (3) relativ zu dem Rohling (1) bewegt werden.

5. Verfahren nach einem der Ansprüche 1 bis 4, **dadurch gekennzeichnet, dass** die Trägerpartikel zumindest zum Teil metallische Partikel sind.

6. Verfahren nach einem der Ansprüche 1 bis 5, **dadurch gekennzeichnet, dass** die Trägerpartikel unterschiedliche Partikelgrößen oder gleiche Partikelgrößen aufweisen.

7. Verfahren nach einem der Ansprüche 1 bis 6, **dadurch gekennzeichnet, dass** als Laser (4) ein kurzgepulster oder ultrakurzgepulster Laser, insbesondere ein Femto-, Pico- oder Nano-Sekundenlaser, verwendet wird.

8. Verfahren nach einem der Ansprüche 5 bis 7, **dadurch gekennzeichnet, dass** die Trägerpartikel Stahl, Titan und/oder eine Titanlegierung umfassen.

9. Verfahren nach einem der Ansprüche 1 bis 8, **dadurch gekennzeichnet, dass** die abrasiven Partikel (5) Korngrößen zwischen 5 µm und 850 µm aufweisen.

## Claims

1. Method for producing a dental instrument or a medical instrument in which a blank (1) is created that is subsequently at least partially coated with abrasive particles, wherein the abrasive particles are supplied onto the surface to be coated in a mixture with carrier particles and are melted by means of a laser (4).

2. Method according to claim 1, **characterized in that** the blank (1) is coated by means of a CNC-controlled processing device, wherein a relative movement occurs between the blank (1) and the laser (4) and the particle supply (3).

3. Method according to claim 2, **characterized in that** the blank (1) is moved relative to the laser (4) and the particle supply (3).

4. Method according to claim 2, **characterized in that** the laser (4) and the particle supply (3) are moved relative to the blank (1).

5. Method according to any of the claims 1 to 4, **characterized in that** the carrier particles are at least partially metallic particles.

6. Method according to any of the claims 1 to 5, **characterized in that** the carrier particles have different particle sizes or identical particle sizes.

7. Method according to any of the claims 1 to 6, **characterized in that** what is used as a laser (4) is a short-pulsed or ultrashort-pulsed laser, in particular a femtosecond, picosecond or nanosecond laser.

8. Method according to any of the claims 5 to 7, **characterized in that** the carrier particles comprise steel, titanium and/or a titanium alloy.

9. Method according to any of the claims 1 to 8, **characterized in that** the abrasive particles (5) have grain sizes of between 5 µm and 850 µm.

## Revendications

1. Procédé de manufacture d'un outil dentaire ou d'un outil médical, dans lequel une ébauche (1) est produite, laquelle est ensuite revêtue au moins en partie de particules abrasives, dans lequel les particules abrasives sont amenées dans un mélange avec des particules de support sur la surface à revêtir et fondues au moyen d'un laser (4).

2. Procédé selon la revendication 1, **caractérisé en ce que** l'ébauche (1) est revêtue au moyen d'un dispositif de traitement à commande CNC, dans lequel un déplacement relatif a lieu entre l'ébauche (1) et le laser (4) et l'amenée de particules (3).

3. Procédé selon la revendication 2, **caractérisé en ce que** l'ébauche (1) est déplacée par rapport au laser (4) et à l'amenée de particules (3).

4. Procédé selon la revendication 2, **caractérisé en ce que** le laser (4) et l'amenée de particules (3) sont déplacés par rapport à l'ébauche (1).

5. Procédé selon l'une quelconque des revendications 1 à 4, **caractérisé en ce que** les particules de support sont au moins en partie des particules métalliques.

6. Procédé selon l'une quelconque des revendications 1 à 5, **caractérisé en ce que** les particules de support présentent différentes tailles de particules ou des tailles de particules identiques.

7. Procédé selon l'une quelconque des revendications 1 à 6, **caractérisé en ce qu'**un laser à impulsions courtes ou à impulsions ultracourtes, en particulier un laser femtoseconde, picoseconde ou nanoseconde, est utilisé en tant que laser (4).

8. Procédé selon l'une quelconque des revendications 5 à 7, **caractérisé en ce que** les particules de support comprennent de l'acier, du titane et/ou un alliage de titane.

9. Procédé selon l'une quelconque des revendications 1 à 8, **caractérisé en ce que** les particules abrasives (5) présentent des granulométries entre 5 µm et 850 µm.
